# EUROPÄISCHE PATENTANMELDUNG

(11) **EP 1 736 704 A2**
(43) Veröffentlichungstag der Anmeldung: **27.12.2006**
(21) Anmeldenummer: 06011310.7
(22) Anmeldetag: 31.05.2006
(51) Int. Cl.: F21V 31/04

(54) **Fluidgefüllte Dichtungseinrichtung**

(30) Priorität: 20.06.2005 DE 202005009625 U
(71) Anmelder: Cooper Crouse-Hinds GmbH, 59494 Soest (DE)
(72) Erfinder: Harnischmacher, Friedhelm, 58706 Menden (DE)
(74) Vertreter: Grünecker, Kinkeldey, Stockmair & Schwanhäusser Anwaltssozietät

(57) **Zusammenfassung**

Eine Dichtungseinrichtung (1) für insbesondere eine explosionsgeschützte Leuchte (2) weist wenigstens eine Dichtung (3) zwischen Leuchtengehäuse (4) und einer Schutzwanne (5) auf. Um eine solche Dichtungseinrichtung (1) dahingehend zu verbessern, dass diese eine höhere Lebensdauer aufweist und eine Wartung nicht mehr oder zumindest nur in größeren Zeitabständen im Vergleich zu einer bekannten Dichtungseinrichtung notwendig ist, weist die Dichtung (3) zumindest einen mit einer Fluidzufuhreinrichtung (6) verbundenen Dichtungshohlraum (7) auf.

## Beschreibung

Die Erfindung betrifft eine Dichtungseinrichtung für insbesondere eine explosionsgeschützte Leuchte mit wenigstens einer Dichtung zwischen Leuchtengehäuse und Schutzwanne.

Die entsprechende Dichtungseinrichtung ist auch für übliche, das heißt nicht explosionsgeschützte Leuchten verwendbar sowie auch für andere Einrichtungen, bei denen eine konstant gute Abdichtung mit hoher Lebensdauer von Vorteil ist.

Im Folgenden wird die Dichtungseinrichtung insbesondere in Zusammenhang mit einer solchen explosionsgeschützten Leuchte beschrieben, die ein Leuchtengehäuse und einer mit diesem verbindbaren Schutzwanne aufweist, wobei zwischen diesen die entsprechende Dichtung der Dichtungseinrichtung angeordnet ist. Die Dichtung dient bei einer solchen Leuchte nicht nur dazu, das Eindringen von Wasser oder Staub zu verhindern, sondern ist auch essentiell für den Explosionsschutz.

Es hat sich allerdings herausgestellt, dass bei üblichen Dichtungseinrichtungen mit der Zeit die Dichtigkeit durch Umgebungsbedingungen beeinflusst und insbesondere beeinträchtigt wird. Dies führt dazu, dass die Dichtungseinrichtung gewartet und gegebenenfalls die Dichtung ausgetauscht werden muss.

Der Erfindung liegt daher die Aufgabe zugrunde, eine Dichtungseinrichtung der eingangs genannten Art dahingehend zu verbessern, dass diese eine höhere Lebensdauer aufweist und eine Wartung nicht mehr oder zumindest nur in größeren Zeitabständen im Vergleich zu einer bekannten Dichtungseinrichtung notwendig ist.

Dieser Aufgabe wird durch eine Dichtungseinrichtung mit den Merkmalen des Anspruches 1 gelöst.

Erfindungsgemäß weist die Dichtung zumindest einen mit einer Fluidzufuhreinrichtung verbundenen Dichtungshohlraum auf. Je nach Zufuhr des Fluids wird der Dichtungshohlraum mehr oder weniger gefüllt und damit entsprechend die Dichtung mehr oder weniger Raum beanspruchen. Da eine solche Dichtung in Regel zwischen zwei relativ zueinander abzudichtenden Teilen angeordnet ist, wird bei Fluidzufuhr zum Dichtungshohlraum die Dichtung stärker gegen die sie umgebenden Abschnitte der entsprechenden Teile gedrückt, wodurch die Dichtigkeit beeinflusst ist. Die Fluidzufuhr kann beispielsweise je nach Erfahrungswerten im monatlichen, jährlichen oder anderen Abständen aktiviert werden, so dass der entsprechende Dichtungshohlraum stärker gefüllt wird und damit die Dichtung wieder stärker gegen die sie umgebenden Abschnitte der entsprechenden Teile zur verbesserten Abdichtung gedrückt wird.

Es besteht die Möglichkeit, dass Abschnitte der Dichtung wenig äußeren Einflüssen unterliegen, und damit auch von sich aus eine höhere Lebensdauer aufweisen. In solchen Abschnitten kann der entsprechende Dichtungshohlraum fehlen. Die Fluidzuführung erfolgt durch die entsprechende Einrichtung nur zu dem Dichtungshohlraum oder den entlang der Dichtung angeordneten Dichtungshohlräumen, wobei diese in besonders beanspruchten Abschnitten der Dichtung angeordnet sein können.

Insbesondere bei Einsatz in explosionsgefährdeten Bereichen und im Zusammenhang mit einer explosionsgeschützten Leuchte kann es als günstig angesehen werden, wenn wenigstens ein Dichtungshohlraum sich im Wesentlichen über die Gesamtlänge der Dichtung erstreckt.

Es kann ausreichend sein, wenn die Dichtung durch Fluidzufuhr zum Dichtungshohlraum nur zwischen einem im Wesentlichen nicht vollständig aufgeblasenen und einem stärker aufgeblasenen Zustand beweglich ist. Dazu ist keine oder nur eine geringe Elastizität der Dichtung erforderlich. Um allerdings die Abdichtung weiter zu verbessern kann es als günstig angesehen werden, wenn die Dichtung durch Druckausübung im Dichtungshohlraum elastisch verformbar ist. Dadurch kann die Dichtung im Wesentlichen wie ein Luftballon oder dergleichen durch Fluidzufuhr elastisch gedehnt werden, so dass sie besonders gut an die sie umgebenden Abschnitte anpressbar ist.

Es besteht die Möglichkeit, dass Fluid von außen direkt von einer unter Druck stehenden Fluidquelle dem Dichtungshohlraum zugeführt wird.

Bei einem vorteilhaften Ausführungsbeispiel kann die Dichtung allerdings von einer solchen externen und gegebenenfalls auszutauschenden Fluiddruckquelle unabhängig sein und die Fluidzufuhreinrichtung eine Fluidpumpeinrichtung und zumindest eine Verbindungsleitung zwischen dieser und dem Dichtungshohlraum aufweisen. Durch die Fluidpumpeinrichtung kann durch deren Betätigung vor Ort entsprechend Fluid zugeführt und dadurch der Druck im Dichtungshohlraum erhöht werden. Es besteht dabei die Möglichkeit, dass die Fluidpumpeinrichtung mobil ist und/oder für verschiedene Fluidzufuhreinrichtungen verwendbar ist. In der Regel ist die Fluidpumpeinrichtung allerdings recht klein und nur für Zufuhr geringer Mengen von Fluid ausgelegt, wobei sie vor Ort beispielsweise in der Nähe der entsprechenden Leuchte oder auch innerhalb der Leuchte verbleibt.

Nicht nur die Fluidpumpeinrichtung kann in der Leuchte angeordnet sein, sondern auch die gesamte Fluidzufuhreinrichtung.

Liegen entsprechende Erfahrungswerte vor, so besteht die Möglichkeit, jeweils nach Ablauf einer bestimmten Zeit die Fluidzufuhreinrichtung zu aktivieren und eine gewisse und geringe Menge Fluid dem Dichtungshohlraum zuzuführen. Allerdings ist insbesondere die Überwachung der Dichtung und deren Dichtigkeit verbessert, wenn gegebenenfalls die Fluidzufuhreinrichtung insbesondere extern überwachbar und steuer- bzw. regelbar ist. Dadurch kann jeweils dann Fluid dem Dichtungshohlraum zugeführt werden, oder auch gegebenenfalls aus diesem abgelassen werden, wenn eine entsprechende Notwendigkeit dazu durch die Überwachung der Fluidzufuhreinrichtung festgestellt wird. Außerdem kann die Steuerung oder Regelung der Fluidzufuhreinrichtung automatisiert werden, so dass jeweils bei Druckabfall innerhalb des Dichtungshohlraums oder einem zu hohen vorliegenden Druck die Fluidzufuhreinrichtung zur Erhöhung bzw. zur Verminderung des Drucks aktiviert wird.

Für eine entsprechende Fluidpumpeinrichtung sind verschiedene Antriebsmittel denkbar. Bei einem vorteilhaften Ausführungsbeispiel kann ein solches Antriebsmittel eine Luftdruckschwankung in der Umgebung der Leuchte sein. Ist dabei die Fluidzufuhreinrichtung aktiviert, wird durch eine solche Luftdruckschwankung eine geringe Menge von Fluid durch die Fluidpumpeinrichtung dem Dichtungshohlraum zugeführt. Falls keine Zufuhr von Fluid notwendig ist, bleibt die Fluidzufuhreinrichtung abgeschaltet und bei Luftdruckschwankungen erfolgt keine Zufuhr von Fluid zum Dichtungshohlraum.

Ein weiteres Antriebsmittel können Temperaturschwankungen sein. Auch durch diese werden beispielsweise entsprechende Gase in der Umgebung der Leuchte stärker oder geringer ausgedehnt und diese temperaturbedingten unterschiedlichen Ausdehnungen oder dadurch bedingte Druckverhältnisse können ebenfalls Antriebsmittel der Fluidpumpeinrichtung sein.

Ein weiteres Beispiel ist eine elektrische Spannung, die ein Fluiddruckelement bewegt. Die Bewegung des Fluiddruckelements setzt Fluid unter Druck, wobei dieses Fluiddruckelement auch bei Druck- und Temperaturschwankungen einsetzbar ist. Ein Beispiel für ein solches Fluiddruckelement im Zusammenhang mit einer elektrischen Spannung als Antriebsmittel ist ein Bimetal.

Bei solchen Antriebsmitteln kann es sich als günstig erweisen, wenn die Fluidpumpeinrichtung einen durch das Antriebsmittel in einem Zylinder verschiebbaren Kolben aufweist. Der Kolben ist beispielsweise mit dem Fluiddruckelement verbunden, so dass bei Änderung der Spannung, entsprechende Temperatur- oder Luftdruckschwankungen der Kolben im Zylinder verschoben wird und dadurch eine geringe Menge Fluid in den Dichtungshohlraum drückt.

Um einen zu hohen Druck innerhalb des Dichtungshohlraums zu vermeiden oder auch den Druck im Dichtungshohlraum zu vermindern, kann der Kolben und/oder die Verbindungsleitung einen verschließbaren Fluidauslaß aufweisen. Dieser Fluidauslaß kann auch verwendet werden, wenn die Fluidpumpeinrichtung noch arbeitet, aber bereits ein ausreichender Fluiddruck innerhalb des Dichtungshohlraums vorliegt.

Um in einfacher Weise auch unabhängig von der Pumpeinrichtung einen bestimmten Fluiddruck innerhalb des Dichtungshohlraums aufrechterhalten zu können, kann insbesondere in der Verbindungsleitung ein Einwegeventil angeordnet sein. Dies verhindert einen Druckabbau im Dichtungshohlraum, erlaubt aber eine weitere Zufuhr von Fluid zur Erhöhung des Innendrucks im Dichtungshohlraum.

Die erfindungsgemäße Fluidzufuhreinrichtung ist so ausgelegt, dass sie geringe Fluidmengen dem Dichtungshohlraum zuführt. In diesem Zusammenhang kann es von Vorteil sein, wenn anfänglich ein bestimmter Fluiddruck innerhalb des Dichtungshohlraums unabhängig von der Fluidzufuhreinrichtung aufgebaut wird, in dem beispielsweise die Verbindungsleitung zusätzlich mit einer externen Fluliddruckquelle verbindbar ist. Diese wird in der Regel nur dann an die Verbindungsleitung angeschlossen, wenn nach Montage beispielsweise der Leuchte mit entsprechender Dichtung anfänglich eine bestimmte Menge Fluid im Dichtungshohlraum eingebracht werden soll. Erst später beim Einsatz der Leuchte wird dann durch die Überwachung und Steuerung der Fluidzufuhreinrichtung und mittels der entsprechenden Fluidpumpeinrichtung gegebenenfalls zusätzlich Fluid zugeführt.

Da die Dichtung nur in gewissen Zeitabständen hinsichtlich ihrer Dichtigkeit überwacht und dann gegebenenfalls Fluid aus dem Dichtungshohlraum abgelassen oder diesem zugeführt wird, ist es ausreichend, wenn die Fluidpumpeinrichtung nur entsprechend zeitweise aktiviert ist.

Eine Möglichkeit zur Aktivierung der Fluidpumpeinrichtung kann darin gesehen werden, dass diese mittels einer Leuchteneinrichtung, insbesondere eines Leuchtenschalters, aktivierbar ist. Dies kann beispielsweise dadurch erfolgen, dass nach Betätigen eines solchen Leuchtenschalters für eine gewisse Zeit die Fluidpumpeneinrichtung läuft, um gegebenenfalls Fluid dem Dichtungshohlraum zur Aufrechterhaltung der Dichtigkeit zuzuführen.

Es besteht ebenfalls die Möglichkeit, dass direkt die Fluidpumpeinrichtung ein- und ausschaltbar ist. Das heißt, diese wird direkt aktiviert und nach einer ausreichenden Laufzeit und Feststellen, dass ein erforderlicher Fluiddruck innerhalb des Dichtungshohlraums vorliegt, wieder ausgeschaltet.

Die Dichtung kann aus unterschiedlichen Materialien gebildet sein, wobei ein Beispiel für ein solches Material Silikon ist.

Es besteht die Möglichkeit, dass die Dichtung insgesamt elastisch verformbar und insbesondere dehnbar ist, wenn zusätzlich Fluid dem Dichtungshohlraum zugeführt und damit der Fluiddruck erhöht wird. Es besteht auch die Möglichkeit, dass die Dichtung zumindest stellenweise einen Schwellkörper mit dem Dichtungshohlraum aufweist. In diesem Fall besteht die Dichtung aus einem im Wesentlichen nicht ausdehnbaren Dichtungsteil und einem durch Veränderung des Fluiddrucks im Dichtungshohlraum veränderbaren Dichtungsteil, das heißt dem entsprechenden Schwellkörper.

Die erfindungsgemäße Dichtungseinrichtung mit allen ihren Bestandteilen ist insbesondere aufgrund der geringen Menge des Fluids, das zur Veränderung des Fluiddrucks im Dichtungshohlraum zugeführt oder abgelassen wird, äußerst klein und kann bei explosionsgeschützten Lampen an diesen unauffällig angeordnet oder auch in diesen enthalten sein. Dabei besteht ebenfalls die Möglichkeit, dass zumindest Fluidpumpeinrichtung und/oder Drucküberwachungs- und/oder Drucksteuer-/regeleinrichtung und/oder Leuchtenschalter und/oder Ein- und Ausschalteinrichtung zusammen mit einem elektrischen Vorschaltgerät (EVG) der Leuchte auf einer insbesondere als Leiterplatte ausgebildeten Trageinrichtung angeordnet und/oder im EVG-Gehäuse enthalten sind. Bei einem Ausführungsbeispiel sind alle entsprechenden Einrichtungen auf dieser Trageinrichtung angeordnet und im Gehäuse enthalten, so dass nur die Verbindungsleitung von diesem zum Dichtungshohlraum läuft.

Im Folgenden wird ein vorteilhaftes Ausführungsbeispiel der Erfindung anhand der in der Zeichnung beigefügten Figuren näher erläutert.

Es zeigen:
- Figur 1: einen Schnitt durch eine teilweise dargestellte Leuchte insbesondere an einem Leuchtenende mit erfindungsgemäßer Dichtungseinrichtung, und
- Figur 2: eine Prinzipdarstellung der Dichtungseinrichtung.

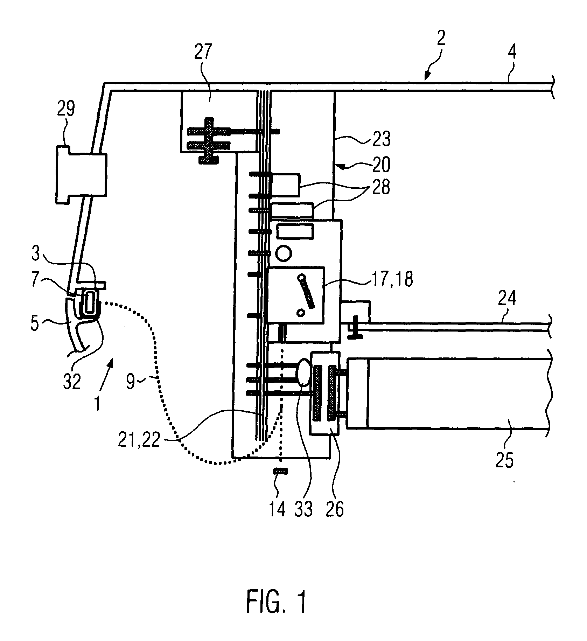

Figur 1 zeigt eine teilweise Darstellung einer erfindungsgemäßen Dichtungseinrichtung 1 bei einer insbesondere explosionsgeschützten Leuchte 2. Die Leuchte 2 umfasst ein Leuchtengehäuse 4, welches beispielsweise zur Befestigung der Leuchte an einer Decke, einem Mast oder dergleichen dient. Seitlich ist in dem Leuchtengehäuse 4 eine Leitungsdurchführung 29 angeordnet, über die eine Verbindungsleitung von einer externen Spannungsquelle in die Leuchte 2 hineinführt. Die Verbindungsleitung kann an einem Klemmstein 27 befestigt werden. Benachbart zum Klemmstein 27 ist im Leuchtengehäuse 4 ein elektronisches Vorschaltgerät 20, EVG, angeordnet. Dieses umfasst eine Reihe von elektronischen Bauelementen 28, wie Kondensatoren, Widerstände, Transistoren und dergleichen. Diese Bauelemente 28 sind auf einer Leiterplatte (Multilayer) 21 als Trageinrichtung 22 angeordnet. Ebenfalls mit der Leiterplatte 21 verbunden ist der Klemmstein 27 sowie eine Fassung 26 für ein Ende einer Leuchtstofflampe 25 als Leuchtmittel. Dadurch wird die Leuchteninnenverdrahtung minimiert. Die Leiterplatte 21 kann eine Multilayer-Leiterplatte sein.

Der Fassung 26 kann ein Temperatursensor 33 zugeordnet sein.

Das EVG 20 weist ein EVG-Gehäuse 23 auf, in dem die verschiedenen Bauelemente sowie auch die Leiterplatte 21 angeordnet sind. Das Gehäuse kann eine Kapselung zur Realisierung einer Zündschutzart d, m oder q aufweisen. Innerhalb des EVG-Gehäuses 23 ist außerdem ein Leuchtenschalter 18 als Leuchteneinrichtung 17 angeordnet. Dieser Leuchtenschalter 18 kann beispielsweise zur Spannungsabschaltung beim Öffnen der Leuchte dienen.

Das Öffnen der Leuchte 2 erfolgt in der Regel dadurch, dass eine Schutzwanne 5 vom Leuchtengehäuse 4 gelöst wird, wobei zwischen diesen eine Dichtung 3 angeordnet ist, die insbesondere in explosionsgefährdeten Bereichen eine Schwadensicherheit der Leuchte 2 gewährleistet.

Oberhalb des Leuchtmittels 25 ist ein Reflektor 24 angeordnet, der auch am EVG-Gehäuse 23 lösbar befestigt sein kann.

Die Dichtung 3 weist einen Dichtungshohlraum 7 auf und ist in einer Dichtungsnut 32 der Schutzwanne 5 teilweise angeordnet und kontaktiert bei Zusammenbau von Schutzwanne 5 und Leuchtengehäuse 4 ein entsprechendes Teil des Leuchtengehäuses 4, um den Innenraum der Leuchte 2 schwadensicher zu gestalten.

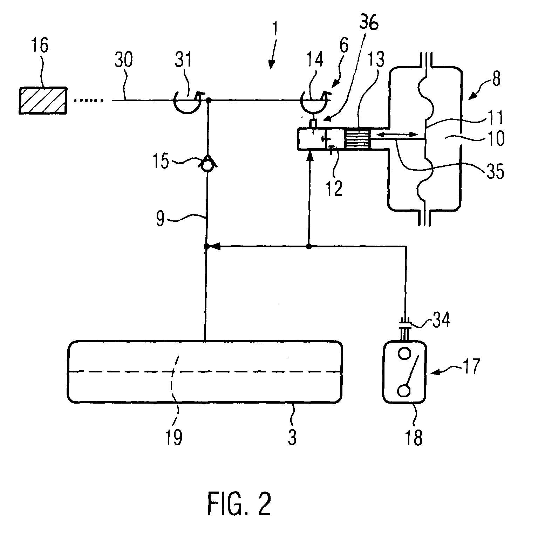

Erfindungsgemäß ist der Dichtungshohlraum 7 über eine Verbindungsleitung 9 mit einer Fluidzufuhreinrichtung 6, siehe Figur 2, verbunden. Mit dieser kann ebenfalls der Leuchtenschalter 18 verbunden sein. Über einen Fluidauslaß 14 kann Fluid vom Dichtungshohlraum 7, der Verbindungsleitung 9 bzw. der Fluidzufuhreinrichtugn 6 nach außen abgegeben werden.

In Figur 2 ist die entsprechende Fluidzufuhreinrichtung 6 im Detail und die gesamte Dichtungseinrichtung 1 prinzipiell dargestellt.

Die Dichtungseinrichtung 1 weist neben der Fluidzufuhreinrichtung 6 und der Verbindungsleitung 9 zur Dichtung 3 noch einen Verschluss 31 auf, über den die Dichtungseinrichtung 1 mit einer externen Fluiddruckquelle 16 über einen Leitungsabschnitt 30 verbindbar ist. In der Verbindungsleitung 9 ist ein Einwegeventil 15 angeordnet. Über dieses kann Druckfluid der Dichtung 3 zugeführt werden.

Zur Abgabe von Druckfluid nach außen ist der Fluidauslaß 14 vorgesehen. Ist dieser geschlossen, wird durch die Fluidzufuhreinrichtung 6 entsprechend Druckfluid der Dichtung 3 zugeführt, wenn die entsprechende Fluidpumpeinrichtung 8 aktiviert ist.

Die Fluidpumpeinrichtung 8 weist einen Zylinder 12 auf, in dem ein Kolben 13 verschiebbar in Zylinderlängsrichtung 35 gelagert ist. Der Querschnitt des Zylinders 12 ist im Vergleich zum Querschnitt eines Fluiddruckelements 11 gering, so dass auch bereits geringe Druckschwankungen oder Temperaturschwankungen als Antriebsmittel 10 zur Verstellung des Fluiddruckelements 11 und damit zur Zufuhr von Druckfluid zur Dichtung 3 dienen können. Das Fluiddruckelement 11 kann beispielsweise eine Membran, ein Bimetall oder dergleichen sein, das je nach verwendetem Antriebsmittel 10 eingesetzt wird. Ein Antriebsmittel ist beispielsweise eine Luftdruckschwankung, durch die eine Membran als Fluiddruckelement 11 je nach Druckunterschied zwischen beiden Seiten der Membran in Zylinderlängsrichtung 35 hin- und herbewegt wird. Durch diese Hin-und Herbewegung wird entsprechend der Kolben 13 im Zylinder 12 bewegt und führt Fluid über das Einwegeventil 15 der Dichtung 3 zu. Dies gilt analog für Temperaturschwankungen, die beispielsweise dazu führen, dass sich das Fluiddruckelement 11 mehr oder weniger in Richtung zum Kolben 13 ausdehnt und daher die Hin- und Herbewegung in Zylinderlängsrichtung 35 bewegt. Bei einem Bimetall kann durch Zufuhr einer entsprechenden Spannung dieses sich in Zylinderlängsrichtung 35 auslenken und so den Kolben 13 hin- und herbewegen.

Die Mengen des Fluids sind nur gering, da eine geringe Zufuhr von Fluid zum Dichtungshohlraum bereits ausreicht, um den Druck innerhalb des Hohlraums zur Aufrechterhaltung einer ausreichenden Dichtigkeit zu erhöhen.

Dabei ist es ausreichend, wenn die Fluidzufuhreinrichtung 6 in Abständen von Tagen, Monaten oder dergleichen betätigt wird, um Druckfluid dem Dichtungshohlraum zuzuführen.

Da die Fluidpumpeinrichtung 8 durch Druck- oder Temperaturschwankungen im Wesentlichen selbsttätig arbeitet, kann über den Fluidauslaß 14 eine Abgabe von Fluid erfolgen, wenn dieses nicht dem Dichtungshohlraum zugeführt werden soll. Der Fluidauslaß 14 ist über eine externe oder ebenfalls in der Leuchte untergebrachte Überwachungseinrichtung und gegebenenfalls Steuer- bzw. Regeleinrichtung überwach- und betätigbar. Dies gilt analog für eine Spannung als Antriebsmittel 10 für das Fluiddruckelement 11. Weiter ist ein Überdruckventil 36 eingebaut über das überschüssiges Fluid abgelassen wird.

Die Verbindungsleitung 9 weist den in sie mündenden Leitungsabschnitt 30 auf, der über den Verschluss 31 mit der externen Fluiddruckquelle 16 verbindbar ist. Diese dient beispielsweise nach Montage der Leuchte zum anfänglichen Einfüllen von Fluid in den Dichtungshohlraum, so dass über die Fluidzufuhreinrichtung 6 nur während des Einsatzes der Leuchte geringe Mengen von Fluid gegebenenfalls zusätzlich zugeführt werden.

Der Leuchtenschalter 18, der ebenfalls durch das Drucksystem betätigt wird kann als Leuchteneinrichtung 17 beispielsweise zu einer Zwangsabschaltung der Leuchte beim Öffnen in explosionsgefährdeten Bereichen dienen.

Die Dichtung 3 ist bei einem Ausführungsbeispiel aus einem elastisch dehnbaren Material mit Hohlraum gebildet, wie beispielsweise Silikon. Bei einem anderen Ausführungsbeispiel kann die Dichtung einen Schwellkörper 19 aufweisen, wobei nur dieser elastisch dehnbar ist und den entsprechenden Dichtungshohlraum aufweist. Der Dichtungshohlraum kann innerhalb der Dichtung auch nur an Stellen angeordnet sein, an denen gegebenenfalls die Dichtigkeit aufgrund der Beanspruchung der Dichtung oder dergleichen im Laufe der Zeit abnimmt und eine Erhöhung des Innendrucks im Dichtungshohlraums durch Zufuhr von Fluid die gewünschte Dichtigkeit wiederherstellt.

Als Fluid wird in der Regel Luft verwendet.

In Figur 2 ist im Zusammenhang mit dem Leuchtenschalter 18 noch ein Spalt 34 der Zündschutzart d dargestellt.

## Patentansprüche

1. Dichtungseinrichtung (1) für insbesondere eine explosionsgeschützte Leuchte (2) mit wenigstens einer Dichtung (3) zwischen Leuchtengehäuse (4) und einer Schutzwanne (5),
**dadurch gekennzeichnet,**
**dass** die Dichtung (3) zumindest einen mit einer Fluidzufuhreinrichtung (6) verbundenen Dichtungshohlraum (7) aufweist.

2. Dichtungseinrichtung nach Anspruch 1,
**dadurch gekennzeichnet,**
**dass** wenigstens ein Dichtungshohlraum (7) sich im Wesentlichen über die gesamte Länge der Dichtung (3) erstreckt.

3. Dichtungseinrichtung nach Anspruch 1 oder 2,
**dadurch gekennzeichnet,**
**dass** die Dichtung (3) durch Druckausübung im Dichtungshohlraum (7) elastisch verformbar ist.

4. Dichtungseinrichtung nach einem der vorangehenden Ansprüche,
**dadurch gekennzeichnet,**
**dass** die Fluidzufuhreinrichtung (6) eine Fluidpumpeinrichtung (8) und zumindest eine Verbindungsleitung (9) zwischen dieser und dem Dichtungshohlraum (7) aufweist.

5. Dichtungseinrichtung nach einem der vorangehenden Ansprüche,
**dadurch gekennzeichnet,**
**dass** die Fluidzufuhreinrichtung (6) in der Leuchte (2) angeordnet ist.

6. Dichtungseinrichtung nach einem der vorangehenden Ansprüche,
**dadurch gekennzeichnet,**
**dass** die Fluidzufuhreinrichtung (6) insbesondere extern überwachbar und steuer- bzw. regelbar ist.

7. Dichtungseinrichtung nach einem der vorangehenden Ansprüche,
**dadurch gekennzeichnet,**
**dass** ein Antriebsmittel (10) der Fluidpumpeinrichtung (8) Luftdruckschwankungen in der Umgebung der Leuchte (2) sind.

8. Dichtungseinrichtung nach einem der vorangehenden Ansprüche,
**dadurch gekennzeichnet,**
**dass** ein Antriebsmittel (10) der Fluidpumpeinrichtung (8) Temperaturschwankungen sind.

9. Dichtungseinrichtung nach einem der vorangehenden Ansprüche,
**dadurch gekennzeichnet,**
**dass** ein Antriebsmittel (10) der Fluidpumpeinrichtung (8) eine ein Fluiddruckelement (11) bewegende elektrische Spannung ist.

10. Dichtungseinrichtung nach einem der vorangehenden Ansprüche,
**dadurch gekennzeichnet,**
**dass** das Fluiddruckelement (11) ein Bimetall ist.

11. Dichtungseinrichtung nach einem der vorangehenden Ansprüche,
**dadurch gekennzeichnet,**
**dass** die Fluidpumpeinrichtung (8) einen durch das Antriebsmittel (10) in einem Zylinder (12) verschiebbaren Kolben (13) aufweist.

12. Dichtungseinrichtung nach einem der vorangehenden Ansprüche,
**dadurch gekennzeichnet,**
**dass** Kolben (13) und/oder Verbindungsleitung (9) einen verschließbaren Fluidauslaß (14) aufweisen.

13. Dichtungseinrichtung nach einem der vorangehenden Ansprüche,
**dadurch gekennzeichnet,**
**dass** in der Verbindungsleitung (9) ein Einwegeventil (15) angeordnet ist.

14. Dichtungseinrichtung nach einem der vorangehenden Ansprüche,
**dadurch gekennzeichnet,**
**dass** die Verbindungsleitung (9) zusätzlich mit einer externen Fluiddruckquelle (16) verbindbar ist.

15. Dichtungseinrichtung nach einem der vorangehenden Ansprüche,
**dadurch gekennzeichnet,**
**dass** die Fluidpumpeinrichtung (8) nur zeitweise aktiviert ist.

16. Dichtungseinrichtung nach einem der vorangehenden Ansprüche,
**dadurch gekennzeichnet,**
**dass** durch die Fluidpumpeinrichtung (8) eine Leuchteneinrichtung (17), insbesondere ein Leuchtenschalter (18), aktivierbar ist.

17. Dichtungseinrichtung nach einem der vorangehenden Ansprüche,
**dadurch gekennzeichnet,**
**dass** die Fluidpumpeinrichtung (8) ein- und ausschaltbar ist.

18. Dichtungseinrichtung nach einem der vorangehenden Ansprüche,
**dadurch gekennzeichnet,**
**dass** die Dichtung (3) aus Silikon gebildet ist.

19. Dichtungseinrichtung nach einem der vorangehenden Ansprüche,
**dadurch gekennzeichnet,**
**dass** die Dichtung (3) zumindest stellenweise einen Schwellkörper (19) mit dem Dichtungshohlraum (7) aufweist.

20. Dichtungseinrichtung nach einem der vorangehenden Ansprüche,
**dadurch gekennzeichnet,**
**dass** zumindest Fluidpumpeinrichtung (8) und/oder Drucküberwachungs- und/oder Drucksteuer-/regeleinrichtung und/oder Leuchtenschalter (18) und/oder Ein- und Ausschalteinrichtung zusammen mit einem elektrischen Vorschaltgerät (20), EVG, auf einer insbesondere als Leiterplatte (21) ausgebildeten Trageinrichtung (22) angeordnet und/oder im EVG-Gehäuse 23 enthalten sind.
